# EUROPEAN PATENT APPLICATION

(11) **EP 3 089 426 A1**
(43) Date of publication of application: **02.11.2016**
(21) Application number: 14874406.3
(22) Date of filing: 12.12.2014
(51) Int. Cl.: H04L 29/08

(54) **DATA DOWNLOAD METHOD AND DEVICE**

(30) Priority: 26.12.2013 CN 201310740042; 26.12.2013 CN 201310740059
(71) Applicant: Lecloud Computing Co., Ltd., Chaoyang District Beijing 100025 (CN)
(72) Inventor: MA, Zhou, ChaoYang District, Beijing 100089 (CN); LI, Ming, ChaoYang District, Beijing 100089 (CN); LI, Zhuo, ChaoYang District, Beijing 100089 (CN)
(74) Representative: Cohausz & Florack
(86) International application number: PCT/CN2014/093704
(87) International publication number: WO 2015/096632

(57) **Abstract**

Disclosed are a data download method and device. The method comprises: based on a peer-to-peer network (P2P) manner, in the process of downloading data from a content delivery network (CDN), when detecting that the total number of clients connected to a locally existing P2P is updated, updating, by a client, a local download decision, a data identifier of data already downloaded and a data identifier of data to be downloaded being recorded in the local download decision (100); sending, by the client, the local download decision to other clients connected to the locally existing P2P, and receiving download decisions sent by other clients connected to the locally existing P2P (110); and comparing, by the client, the local download decision with the received download decisions, and when it is determined that the local download decision and any received download decision contain the same data identifier according to the comparison result, determining an adjustment policy with respect to the local download decision based on a data download state characterized by the same data identifier (120). This method avoids the repetitive download of data already downloaded, thereby effectively saving network resources.

## Description

This application claims the benefits of Chinese Patent Application No. 201310740042.4, filed with the State Intellectual Property Office of People's Republic of China on December 26, 2013 and entitled "Method and apparatus for adjusting data download decision", and Chinese Patent Application No. 201310740059.X, filed with the State Intellectual Property Office of People's Republic of China on December 26, 2013 and entitled "Method and apparatus for transmitting data", both of which are hereby incorporated by reference in their entireties.

### Field

The present disclosure relates to the field of data downloading and particularly to a method and apparatus for downloading data.

### Background

At present, clients download data from a Content Delivery Network (CDN) based on the Peer to Peer (P2P) technology by downloading the data from the CDN according to some proportion decision. For example, if there are five clients P2P-connected with each other, then each of the clients will download one fifth of the data from the CDN, and then the five clients will further pass their downloaded data to each other to thereby complete the data downloading. The respective clients need to obtain the proportion decision to determine the respective segments of the data to be downloaded by the corresponding clients, before they download the data, where the proportion decision can be issued by the CDN, or can be determined by the respective clients from their generated random numbers.

In a real application, the clients may go online or offline at any time, so there will be a varying number of clients obtaining from the same data source, and thus the proportion decision to be applied to the clients needs to be updated in a timely manner. However the proportion decision has been so defined currently that the respective clients to which a renewed proportion decision is applied may download segments of the data, which have been downloaded by the other clients, so that the segments of the data may be downloaded repeatedly, thus resulting in a considerable waste of network resources.

### Summary

Embodiments of the disclosure provide a method and apparatus for downloading data so as to address the problem in the prior art of repeated downloading when the clients download data according to the currently defined proportion decision.

Particular technical solutions according to the embodiments of the disclosure are as follows:

In a first aspect, a method for downloading data includes:
updating, by a client, a local download decision recording data identifiers of downloaded data, and data identifiers of data to be downloaded, upon detecting an update to the total number of clients Peer to P2P-connected with the local client while the data are being downloaded from a CDN in the P2P mode;
sending, by the client, the local download decision to the other clients P2P-connected with the local client, and receiving download decisions sent by the other clients P2P-connected with the local client; and
comparing, by the client, the local download decision with the received download decisions, and if it is determined from a comparison result that the same data identifier is included in the local download decision and any one of the received download decisions, then determining an adjustment to the local download decision according to a data download state characterized by the same data identifier.

In this implementation, if the clients operating in the P2P mode go online or offline, then the local download decisions of the respective clients will be updated in a timely manner, and compared and adjusted, thus avoiding the downloaded data from being downloaded repeatedly and saving in effect the network resources.

In a first possible implementation, detecting, by the client, the update to the total number of clients P2P-connected with the local client includes:
the client being instructed by the CDN about the update to the total number of clients P2P-connected with the local client; or
knowing, by the client, the update to the total number of clients P2P-connected with the local client, upon reception of a P2P access notification sent by other client.

In this implementation, the client can be notified by the CDN or a client newly going online about the update to the total number of clients P2P-connected with the local client.

In a second possible implementation, updating, by the client, the local download decision includes:
updating, by the client, the local download decision according to instruction from the CDN; or
updating, by the client, the local download decision using locally generated random numbers.

In this implementation, the client can update the local download decision in a timely manner by generating the random numbers.

In a third possible implementation, if it is determined from the comparison result that the same data identifier is included in the local download decision and any one of the received download decisions, then adjusting, by the client, the local download decision according to the data record state represented by the same data identifier includes:
if it is determined from the comparison result that the same data identifier is included in the local download decision and any one of the received download decisions, then comparing, by the client, an initial record time of the same data identifier in the local download decision with an initial record time thereof in the any one of the received download decision; and
if the initial record time of the same data identifier in the local download decision is earlier than the initial record time thereof in the any one of the received download decision, then determining no adjustment to the local download decision, and instructing the client sending the any one of the received download decision to delete the same data identifier, and
if the initial record time of the same data identifier in the local download decision is later than the initial record time thereof in the any one of the received download decision, then deleting the same data identifier directly from the local download decision.

In this implementation, the client can compare the initial record times of the same data identifier in the local download decisions of the different clients, and maintain only the data identifier in the local download decision of the client with an earlier initial record time, to thereby avoid the data from being downloaded repeatedly.

In a fourth possible implementation, if it is determined from the comparison result that the same data identifier is included in the local download decision and any one of the received download decisions, then adjusting, by the client, the local download decision according to the data record state characterized by the same data identifier includes:
if it is determined from the comparison result that the same data identifier is included in the local download decision and any one of the received download decisions, then comparing, by the client, the amount of downloaded data, corresponding to the same data identifier, recorded in the local download decision with the amount of downloaded data, corresponding to the same data identifier, recorded in the any one of the received download decision; and
if the amount of downloaded data, corresponding to the same data identifier, recorded in the local download decision is more than the amount of downloaded data, corresponding to the same data identifier, recorded in the any one of the received download decision, then determining no adjustment to the local download decision, and instructing the client sending the any one of the received download decision to delete the same data identifier, and
if the amount of downloaded data, corresponding to the same data identifier, recorded in the local download decision is less than the amount of downloaded data, corresponding to the same data identifier, recorded in the any one of the received download decision, then deleting the same data identifier directly from the local download decision.

In this implementation, the client can compare the amounts of downloaded data corresponding to the same data identifier in the local download decisions of the different clients, and maintain only the data identifier in the local download decision of the client with a larger amount of downloaded data, to thereby avoid the data from being downloaded repeatedly.

In a fifth possible implementation, after the adjust to the local download decision is determined, the method further includes:
receiving a data download request sent by other client, and obtaining at least one data identifier interval from the data download request;
matching each of data identifiers corresponding to locally stored data respectively with the at least one data identifier interval, and obtaining a result of matching; and
if it is determined from the result of matching that there is at least one local data identifier lying in the at least one data identifier interval, then sending the stored data corresponding to the at least one data identifier to the other client.

In a sixth possible implementation, receiving the data download request sent by the other client, and obtaining the at least one data identifier interval from the data download request includes:
upon reception of the data download request sent by the other client, obtaining all the data identifiers carried in the data download request, from the data download request in a preset order, determining for each of the obtained data identifiers whether there is another data identifier consecutive in value therewith, and if so, grouping the data identifier and the other data identifier into the same data identifier interval; otherwise, grouping the data identifier separately into a data identifier interval; or
upon reception of the data download request sent by the other client, obtaining all the data identifiers and associated interval identifiers carried in the data download request, from the data download request, and grouping the respective data identifiers into at least one data identifier interval according to the interval identifiers associated with each of the data identifiers; or
upon reception of the data download request sent by the other client, obtaining the at least one data identifier interval directly from a specified field in the data download request.

In a seventh possible implementation, matching each of the data identifiers corresponding to the locally stored data respectively with the at least one data identifier interval, and obtaining the result of matching includes:
determining whether the value of any one of the data identifiers corresponding to the locally stored data is more than or equal to the lowest value of data identifier in the at least one data identifier interval, and less than or equal to the highest value of data identifier in the at least one data identifier interval; and
if so, then determining that the any one of the data identifier lies in the at least one data identifier interval;
otherwise, determining that the any one of the data identifier does not lie in the at least one data identifier interval.

In an eighth possible implementation, if it is determined from the result of matching that there is at least one local data identifier lying in the at least one data identifier interval, then sending the stored data corresponding to the at least one data identifier to the other client includes:
if it is determined that there is at least one local data identifier lying in the at least one data identifier interval, then further determining whether the number of other clients currently requesting for obtaining the stored data corresponding to the at least one data identifier reaches a preset threshold, and sending the stored data corresponding to the at least one data identifier to the other client upon determining that the number of other clients does not reach the preset threshold.

In a ninth possible implementation, the method further includes:
sending an indicator of a wait length of time to the other client, or instructing the other client to reinitiate a data download request to another data source, upon determining that the number of other clients currently requesting for obtaining the stored data corresponding to the at least one data identifier reaches the preset threshold.

In a second aspect, an apparatus for downloading data includes:
an updating module configured to update a local download decision recording data identifiers of downloaded data, and data identifiers of data to be downloaded, upon detecting an update to the total number of clients P2P-connected with a local client while the data are being downloaded from a CDN in the P2P mode;
a communicating module configured to send the local download decision to the other clients P2P-connected with the local client, and to receive download decisions sent by the other clients P2P-connected with the local client; and
a comparing module configured to compare the local download decision with the received download decisions, and if it is determined from a comparison result that the same data identifier is included in the local download decision and any one of the received download decisions, to determine an adjustment to the local download decision according to a data download state represented by the same data identifier.

Thus the respective modules interoperate to update the local download decisions of the respective clients in a timely manner, and to compare and adjust the local download decisions of the respective clients, thus avoiding the downloaded data from being downloaded repeatedly and saving in effect the network resources.

In a first possible implementation, the updating module is configured:
to be notified by the CDN about the update to the total number of clients P2P-connected with the local client; or
to know the update to the total number of clients P2P-connected with the local client, upon reception of a P2P access notification sent by other client.

In this implementation, the updating module can be notified by the CDN or a client newly going online about the update to the total number of clients P2P-connected with the local client.

In a second possible implementation, the updating module is configured:
to be instructed by the CDN to update the local download decision; or
to update the local download decision using locally generated random numbers.

In this implementation, the updating module can update the local download decision in a timely manner by generating the random numbers.

In a third possible implementation, the comparing module is configured:
if it is determined from the comparison result that the same data identifier is included in the local download decision and any one of the received download decisions, to compare an initial record time of the same data identifier in the local download decision with an initial record time thereof in the any one of the received download decisions; and
if the initial record time of the same data identifier in the local download decision is earlier than the initial record time thereof in the any one of the received download decisions, to determine no adjustment to the local download decision, and to instruct the client sending the any one of the received download decisions to delete the same data identifier, and
if the initial record time of the same data identifier in the local download decision is later than the initial record time thereof in the any one of the received download decisions, to delete the same data identifier directly from the local download decision.

In this implementation, the comparing module can compare the initial record times of the same data identifier in the local download decisions of the different clients, and maintain only the data identifier in the local download decision of the client with an earlier initial record time, to thereby avoid the data from being downloaded repeatedly.

In a fourth possible implementation, the comparing module is configured:
if it is determined from the comparison result that the same data identifier is included in the local download decision and any one of the received download decisions, to compare the amount of downloaded data, corresponding to the same data identifier, recorded in the local download decision with the amount of downloaded data, corresponding to the same data identifier, recorded in the any one of the received download decisions; and
if the amount of downloaded data, corresponding to the same data identifier, recorded in the local download decision is more than the amount of downloaded data, corresponding to the same data identifier, recorded in the any one of the received download decisions, to determine no adjustment to the local download decision, and to instruct the client sending the any one of the received download decisions to delete the same data identifier, and
if the amount of downloaded data, corresponding to the same data identifier, recorded in the local download decision is less than the amount of downloaded data, corresponding to the same data identifier, recorded in the any one of the received download decisions, to delete the same data identifier directly from the local download decision.

In this implementation, the comparing module can compare the amounts of downloaded data corresponding to the same data identifier in the local download decisions of the different clients, and maintain only the data identifier in the local download decision of the client with a larger amount of downloaded data, to thereby avoid the data from being downloaded repeatedly.

In a fifth possible implementation, the apparatus further includes:
an obtaining module configured to receive a data download request sent by other client, and to obtain at least one data identifier interval from the data download request, after the adjustment to the local download decision is determined;
a matching module configured to match each of data identifiers corresponding to locally stored data respectively with the at least one data identifier interval, and to obtain a result of matching; and
a sending module configured, if it is determined from the result of matching that there is at least one local data identifier lying in the at least one data identifier interval, to send the stored data corresponding to the at least one data identifier to the client.

In a sixth possible implementation, the obtaining module is configured:
upon reception of the data download request sent by the other client, to obtain all the data identifiers carried in the data download request, from the data download request in a preset order, to determine for each of the obtained data identifiers whether there is another data identifier consecutive in value therewith, and if so, to group the data identifier and the other data identifier into the same data identifier interval; otherwise, to group the data identifier separately into a data identifier interval; or
upon reception of the data download request sent by the other client, to obtain all the data identifiers and associated interval identifiers carried in the data download request, from the data download request, and to group the respective data identifiers into at least one data identifier interval according to the interval identifiers associated with each of the data identifiers; or
upon reception of the data download request sent by the other client, to obtain the at least one data identifier interval directly from a specified field in the data download request.

In a seventh possible implementation, the matching module is configured:
to determine whether the value of any one of the data identifiers corresponding to the locally stored data is more than or equal to the lowest value of data identifier in the at least one data identifier interval, and less than or equal to the highest value of data identifier in the at least one data identifier interval; and
if so, to determine that the any one of the data identifier lies in the at least one data identifier interval;
otherwise, to determine that the any one of the data identifier does not lie in the at least one data identifier interval.

In an eighth possible implementation, the sending module is configured:
if it is determined that there is at least one data identifier lying in the at least one data identifier interval, to further determine whether the number of other clients currently requesting for obtaining the stored data corresponding to the at least one data identifier reaches a preset threshold, and to send the stored data corresponding to the at least one data identifier to the other client upon determining that the number of other clients does not reach the preset threshold.

In a ninth possible implementation, the sending module is further configured:
to send an indicator of a wait length of time to the other client, or to instruct the other client to reinitiate a data download request to another data source, if it is determined that the number of other clients currently requesting for obtaining the stored data corresponding to the at least one data identifier reaches the preset threshold.

In a third aspect, an electronic device includes a controller, a memory, and a network transmission apparatus, wherein:
the memory is configured to store a local download decision, and information about opposite electronic devices Peer to Peer (P2P)-connected with the electronic device;
the controller is configured to perform the operations of: updating a local download decision recording data identifiers of downloaded data, and data identifiers of data to be downloaded, upon detecting an update to the total number of opposite electronic devices P2P-connected with the local electronic device while the data are being downloaded from a Content Distribution Network (CDN) in the P2P mode; sending the local download decision to the opposite electronic devices P2P-connected with the local electronic device, and to receive download decisions sent by the opposite electronic devices P2P-connected with the local electronic device, through the network transmission apparatus; and comparing the local download decision with the received download decisions, and if it is determined from a comparison result that the same data identifier is included in the local download decision and any one of the received download decisions, then determining an adjustment to the local download decision according to a data download state represented by the same data identifier; and
the network transmission apparatus is configured to be instructed by the controller to receive or transmit the data from or to a CDN node or the opposite electronic devices.

In this implementation, if the electronic devices operating in the P2P mode go online or offline, then the local download decisions of the respective electronic devices will be updated in a timely manner, and compared and adjusted, thus avoiding the downloaded data from being downloaded repeatedly and saving in effect the network resources.

In a fourth aspect, a system for downloading data includes at least two of the electronic devices above, which are connected over a network, and a CDN system connected with the electronic devices.

In this implementation, if the electronic devices operating in the P2P mode go online or offline, then the local download decisions of the respective electronic devices will be updated in a timely manner, and compared and adjusted, thus avoiding the downloaded data from being downloaded repeatedly and saving in effect the network resources.

### Brief Description of the Drawings

Fig.1 is a flow chart of a method for adjusting a data download decision according to an embodiment of the disclosure;
Fig.2 is a flow chart of a method for transmitting data according to an embodiment of the disclosure;
Fig.3 is a schematic diagram of an apparatus for downloading data according to an embodiment of the disclosure; and
Fig.4 is a schematic structural diagram of an electronic device according to an embodiment of the disclosure.

### Detailed Description of the Embodiments

In order to make the objects, technical solutions and advantages of the embodiments of the disclosure more apparent, the technical solutions according to the embodiments of the disclosure will be described clearly and fully in further details with reference to the drawings in the embodiments of the disclosure, and apparently the embodiments described below are only some but not all of the embodiments of the disclosure. All the other embodiments which are apparent to those ordinarily skilled in the art based upon the embodiments here of the disclosure without any inventive effort shall fall into the scope of the invention as claimed.

The technical solutions according to the invention can address the problem in the prior art of repeated downloading when the clients download data according to the currently defined proportion decision.

An embodiment of the disclosure provides a method for downloading data, and preferred implementations thereof according to the disclosure which will be described below in details with reference to the drawings.

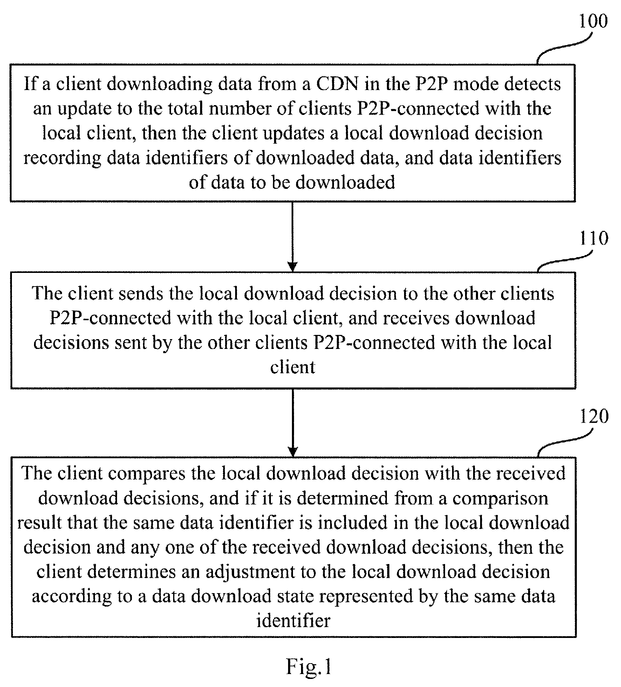

Referring to Fig.1, in an embodiment of the disclosure, a particular flow chart of a method for adjusting a data download decision while downloading data is as follow:

In the operation 100, if a client downloading data from a CDN in the P2P mode detects an update to the total number of clients P2P-connected with the local client, then the client updates a local download decision recording data identifiers of downloaded data, and data identifiers of data to be downloaded.

In a real application, the client can be notified by the CDN about the update to the total number of clients P2P-connected with the local client. Particularly if a client goes online, then the CDN will notify the client about the number of other clients in the same P2P network the client before the client goes online, and also notify each of the other clients about the new client going online. If there are more than two clients going online at the same time, then the CDN will notify each of the clients newly going online about the number of other clients going online at the same time as the client, and the number of other clients in the same P2P network as the client before the client goes online, and also notify each of other clients in the same P2P network without the new client being online about the new clients going online, and the number of clients newly going online.

Alternatively, in order to alleviate a burden on the CDN, the client can know the update to the total number of clients P2P-connected with the local client, upon reception of a P2P access notification sent by other client. Particularly if there is a new client going online, then the new client will notify each of other clients in the same P2P network that the new client goes online.

In an embodiment of the disclosure, the client can be instructed by the CDN to update the local download decision. Particularly the CDN firstly obtains the data identifiers of the downloaded data in the local download decision prior to the update to the client, and then generates and issues a set of random numbers to the client, where the set of random numbers corresponds to the data identifiers of the download data, and the set of random numbers definitely include numerals corresponding to the data identifiers of the data downloaded by the client.

For example, if a client A, a client B, and a client C are P2P-connected with each other, then all the data of a file to be downloaded by the three clients are divided into 9 segments, each of which is identified by one of the numerals 1 to 9; and the data corresponding to the data identifiers 1 to 3 are downloaded by the client A, the data corresponding to the data identifiers 4 to 6 are downloaded by the client B, and the data corresponding to the data identifiers 7 to 9 are downloaded by the client C. If there is a client D newly going online, then if the client A has downloaded the data corresponding to the data identifier 1 and is downloading the data corresponding to the data identifier 2, the client B is downloading the data corresponding to the data identifier 4, and the client C is downloading the data corresponding to the data identifier 7, then the CDN generates a set of random numbers (1, 2, X_{A1}) for the client A, where X_{A1}) is any one of the natural numbers 3 to 9; the CDN generates a set of random numbers (4, X_{B1}, X_{B2}) for the client B, where X_{B1} and X_{B2} are any ones of the natural numbers 1 to 3 and 5-9 and different from each other; the CDN generates a set of random numbers (7, X_{C1}, X_{C2}) for the client C, where X_{C1} and X_{C2} are any ones of the natural numbers 1 to 6, 8 and 9 and different from each other; and the CDN generates a set of random numbers (X_{DI}, X_{D2}, X_{D3}) for the client D, where X_{D1}, X_{D2} and X_{D3} are any ones of the natural numbers 1 to 9 and different from each other; and the data identifiers corresponding to the data which are not downloaded by the client A, the client B, and the client C are definitely included among the eight random numbers X_{A1}, X_{B1}, X_{B2}, X_{C1}, X_{C2}, X_{DI}, X_{D2} and X_{D3}, that is, the five numerals 3, 5, 6, 8 and 9 are definitely included among these eight random numbers.

Alternatively in order to alleviate the burden on the CDN, the local download decision can be updated by the client using locally generated random numbers corresponding to the data identifiers of the download data, where numerals corresponding to the data identifiers of the locally downloaded data are definitely included among the random numbers generated by the client. The respective clients can generate locally the random numbers by generating one or a plurality more random numbers so that the data identifiers corresponding to all the data which are not downloaded, are included among all the random numbers generated by the respective clients,

Still referring to the example above, if the respective clients generate locally the random numbers on their own initiatives, and the respective clients generate two more random numbers than normal so that the data identifiers corresponding to all the data which are not downloaded, are included among all the random numbers generated by the respective clients, then a set of random numbers (1, 2, X_{A1}, X_{A2}, X_{A3}, X_{A4}) is generated by the client A, where X_{A1}, X_{A2}, X_{A3} and X_{A4} are any ones of the natural numbers 3 to 9 and different from each other; a set of random numbers (4, X_{B1}, X_{B2}, X_{B3}, X_{B4}) is generated by the client B, where X_{B1}, X_{B2}, X_{B3} and X_{B4} are any ones of the natural numbers 1 to 3 and 5 to 9 and different from each other; a set of random numbers (7, X_{C1}, X_{C2}, X_{C3}, X_{C4}) is generated by the client C, where X_{C1}, X_{C2}, X_{C3} and X_{C4} are any ones of the natural numbers 1 to 6, 8 and 9 and different from each other; and a set of random numbers (X_{D1}, X_{D2}, X_{D3}, X_{D4}, X_{D5}) is generated by the client D, where X_{D1}, X_{D2}, X_{D3}, X_{D4} and X_{D5} are any ones of the natural numbers 1 to 9 and different from each other.

In the operation 110, the client sends the local download decision to the other clients P2P-connected with the local client, and receives download decisions sent by the other clients P2P-connected with the local client.

In the operation 120, the client compares the local download decision with the received download decisions, and if it is determined from a comparison result that the same data identifier is included in the local download decision and any one of the received download decisions, then the client determines an adjustment for the local download decision according to a data download state represented by the data identifier.

Particularly in a first implementation, the client can compare an initial record time of the same data identifier in the local download decision with an initial record time thereof in the any one of the received decisions when it is determined from the comparison result that the same data identifier is included in the local download decision and the any one of the received download decisions. If the initial record time of the same data identifier in the local download decision is earlier than the initial record time thereof in the any one of the received download decisions, then the client determines no adjustment to the local download decision, and instructs the client sending the any one of the received download decisions to delete the same data identifier. If the initial record time of the same data identifier in the local download decision is later than the initial record time thereof in the any one of the received download decisions, then the same data identifier is deleted directly from the local download decision, where the initial record time is the time when the data identifier is initially recorded in the download decision.

For example, if the initial local download decision of the client A is (1, 2, 3), and the initial local download decision of the client B is (4, 5, 6), and after the client C newly goes online, the updated local download decision of the client A is (1, 4, 5), the updated local download decision of the client B is (1, 2, 5), and the updated local download decision of the client C is (1, 3, 6). The respective clients send their local download decisions respectively to the other two clients, and receive the local download decision from the other two clients, and compare them. For the client A, the same data identifiers 1 and 5 are included in the local download decision thereof and the local download decision of the client B, and the same data identifier 1 is included in the local download decision thereof and the local download decision of the client C; and since the initial record time of the data identifier 1 in the local download decision of the client A is earlier than the initial record times thereof in the local download decisions of the client B and the client C, and the initial record time of the data identifier 5 in the local download decision of the client A is later than the initial record time thereof in the client B, only the data identifier 5 is deleted from the local download decision of the client A, but the data identifier 1 is not adjusted. Following the adjustment to the local download decisions, the local download decision of the client A is adjusted to be (1, 4), the local download decision of the client B is adjusted to be (2, 5), and the local download decision of the client C is adjusted to be (3, 6).

In a second implementation, the client can compare the amount of downloaded data, corresponding to the same data identifier, recorded in the local download decision with the amount of downloaded data, corresponding to the same data identifier, recorded in the any one of the received download decisions, when it is determined from the comparison result that the same data identifier is included in the local download decision and the any one of the received download decisions. If the amount of downloaded data, corresponding to the same data identifier, recorded in the local download decision is more than the amount of downloaded data, corresponding to the same data identifier, recorded in the any one of the received download decisions, then the client determines no adjustment to the local download decision, and instructs the client sending the any one of the received download decisions to delete the same data identifier. If the amount of downloaded data, corresponding to the same data identifier, recorded in the local download decision is less than the amount of downloaded data, corresponding to the same data identifier, recorded in the any one of the received download decisions, then the same data identifier is deleted directly from the local download decision.

In the second implementation, preferably when it is determined from the comparison result that the same data identifier is included in the local download decision and the any one of the received download decisions, the client can firstly determine whether the difference between the amount of downloaded data, corresponding to the same data identifier, recorded in the local download decision and the amount of downloaded data, corresponding to the same data identifier, recorded in the any one of the received download decisions is above a preset threshold, and if so, then the client compares the amount of downloaded data, corresponding to the same data identifier, recorded in the local download decision with the amount of downloaded data, corresponding to the same data identifier, recorded in the any one of the received download decisions, maintains the same data identifier in the local decision of the client with the larger amount of downloaded data, and deletes the same data identifier in the local decision of the client with less amount of downloaded data; otherwise, the client further obtains a current download rate of the client sending the any one of the received download decisions, compares it with a local download rate, maintains the same data identifier in the local decision of the client with the higher download rate, and deletes the same data identifier in the local decision of the client with the lower download rate.

Further to the embodiment above, the client can further start to exchange the downloaded data locally with the other clients, after determining the adjustment to the local download decision, that is, the respective clients send their downloaded data respectively to the other clients.

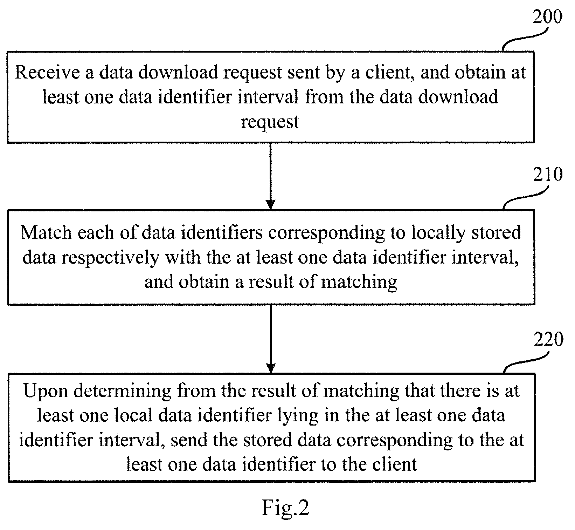

Furthermore in an embodiment of the disclosure, in order to improve the data transmission efficiency in the P2P network, a method for transmitting data can be further optimized, and referring to Fig.2, in an embodiment of the disclosure, a particular flow of a method for transmitting data while downloading the data is as follows:

In the operation 200, the client receives a data download request sent by other client, and obtains at least one data identifiers interval from the data download request.

In an embodiment of the disclosure, the data identifier interval obtained from the data download request of the other client can be only one data identifier interval, or can be more than one data identifier interval, each of which can be represented by the lowest value of data identifier and the highest value of data identifier lying in the data identifier interval, e.g., [M, N], where M represents the lowest value of data identifier in the data identifier interval, and N represents the highest value of data identifier lying in the data identifier interval.

In an embodiment of the disclosure, the data identifier interval can be obtained from the data download request of the other client in the following three implementations:

In a first implementation, the client, upon reception of the data download request sent by the other client, obtains all the data identifiers carried in the data download request, from the data download request in a preset order, and determines for each of the obtained data identifiers whether there is another data identifier consecutive in value therewith, and if so, then the client groups the data identifier and the other data identifier consecutive in value therewith into the same data identifier interval; otherwise, the client groups the data identifier separately into a data identifier interval.

For example, if the client A sends a data download request to the client B, then the client B reads all the data identifiers corresponding to data requested by the client A, from the data download request of the client A, and sorts the read data identifiers in an ascending order (or a descending order). If a set of all the sorted data identifiers is {1, 2, 3, 4, 5, 6, 8}, then the client B further reads the data identifiers sequentially from the set in an ascending order (or a descending order). When the data identifier 1 is read, since the client B reads only one data identifier at this time, the client groups the data identifier 1 separately into a data identifier interval [1, 1]. When the data identifier 2 is read, then the client B determines whether the previously read data identifier is consecutive in value therewith, and since the data identifier 2 is consecutive in value with the previously read data identifier 1, the client B groups the data identifier 2 and the data identifier 1 into the same data identifier interval denoted as [1, 2]. This process is repeated, and when the data identifier 6 is read, then since the data identifier 6 is consecutive in value with the highest value of data identifier 5 in the determined data identifier interval [1, 5], the client B also groups the data identifier 6 into the data identifier interval denoted as [1, 6]. When the client B reads the data identifier 8, then since the data identifier 8 is inconsecutive in value with the highest value of data identifier 6 in the determined data identifier interval [1, 6], the client B groups the data identifier 8 separately into a data identifier interval denoted as [8, 8]. As a result, the client B reads the two data identifier intervals [1, 6] and [8, 8] respectively from the data download request of the client A.

The first implementation is advantageous in saving the amount of data to be processed by the client requesting data, and avoiding any data from being missed. Moreover the data identifiers can be subsequently matched based upon the determined data identifier interval simply by matching the data identifiers corresponding to the locally stored data with the data identifier interval, to thereby greatly improve the data processing efficiency as compared with the prior art in which each of the received data identifiers is matched with the respective data identifiers of the locally stored data.

In a second implementation, the client, upon reception of the data download request sent by the other client, obtains all the data identifiers and associated interval identifiers carried in the data download request, from the data download request, and groups the respective data identifiers into at least one data identifier interval according to the interval identifiers associated with each of the data identifiers.

In this implementation, the data identifier interval is determined by the other client requesting for downloading the data in the same way as in the first implementation, that is, firstly the other client sorts all the data identifiers corresponding to the data to be requested locally, in an ascending order (or a descending order), then obtains the data identifiers sequentially in an ascending order (or a descending order), and determines for each of the obtained data identifiers whether there is another data identifier consecutive in value therewith, and if so, then the other client groups the data identifier and the other data identifier consecutive in value therewith into the same data identifier interval; otherwise, the other client groups the data identifier separately into a data identifier interval. The other client assigns each of the data identifiers with the corresponding interval identifier after the data identifier intervals are determined, where all the interval identifiers of the data identifiers in the same interval are the same, and the interval identifiers of the data identifiers in different intervals are different from each other. As a result, the other client carries all the data identifiers and their associated interval identifiers in the data download request, and sends the data download request to the client for processing.

For example, if the client A intends to request the client B for downloading data, and all the data identifiers corresponding to the data to be requested by the client A are {1, 2, 3, 4, 5, 6, 8}, then the client A firstly groups locally all the data identifier corresponding to the data to be requested by the client A, into two data identifier intervals [1,6] and [8, 8] respectively. The client A assigns the data identifiers in the interval [1,6] with an interval identifier α, and the data identifier in the interval [8, 8] with an interval identifier β. As a result, the client A carries all the data identifiers and their associated interval identifiers {1α, 2α, 3α, 4α, 5α, 6α, 8α} in the data download request, and sends the data download request to the client B. The client B can read sequentially all the data identifiers and the associated interval identifiers carried by the client in any order upon reception of the data download request of the client A. When the client B reads the first data identifier (e.g., the data identifier 1), then the client B reads only the one data identifier at this time, so the client B temporarily groups the data identifier 1 separately into a set {1}α. If the client B reads the second data identifier (e.g., the data identifier 8), then the client B determines whether the interval identifier of the previously read data identifier is the same as the interval identifier of the second data identifier, and since the interval identifier of the data identifier 8 is different from the interval identifier of the previously read data identifier 1, the client B groups the data identifier 8 separately into another set {8}β. When the client B obtains the third data identifier (e.g., the data identifier 6), then the interval identifier of the data identifier 6 is the same as the interval identifier of the previously read data identifier 1, so the client B groups the data identifier 6 and the data identifier 1 into the same set denoted as {1, 6}α. As a result, the client B reading all the data identifiers can obtain the two sets {1, 2, 3, 4, 5, 6}α and {8}β respectively, and then the client B identifies the data identifier interval corresponding to each of the sets as [1, 6] and [8, 8] respectively by the lowest value of data identifier and the highest value of data identifier in the set.

The second implementation is advantageous in that the client can group rapidly the data identifiers carried in the data download request into the intervals according to the data identifiers and their associated interval identifiers carried in the data download request to thereby save the amount of data to be processed by the client and improve the data processing efficiency thereof. Even if the interval identifiers of the data identifiers are lost while being transmitted, then the client receiving all the data identifiers can group the data identifiers into the intervals as in the first implementation for the data identifiers to be subsequently matched.

In a third implementation, the client, upon reception of the data download request sent by the other client, obtains the at least one data identifier interval directly from a specified field in the data download request.

In the third implementation, the data identifier interval is determined by the other client requesting for downloading the data in the same way as in the first implementation and the second implementation, that is, firstly the other client sorts all the data identifiers corresponding to the data to be requested, in an ascending order (or a descending order), then obtains the data identifiers sequentially in an ascending order (or a descending order), and determines for each of the obtained data identifiers whether there is another data identifier consecutive in value therewith, and if so, then the other client groups the data identifier and the other data identifier consecutive in value therewith into the same data identifier interval; otherwise, the other client groups the data identifier separately into a data identifier interval. After the data identifiers are grouped into the intervals, the other client records the data identifier intervals in the specified field of the data download request, and sends the data download request to the client. The client can obtain the data identifier intervals corresponding to all the data requested by the other client, directly from the data download request.

The third implementation is advantageous in that transmission of only the data identifier intervals instead of all the data identifiers under a poor network condition can save the amount of transmitted data and improve the data transmission efficiency.

If the other client requests still another client for downloading data, then processing capacities of the two clients shall be taken into account so that the data identifier intervals are determined by the other client with a higher processing capacity among the other clients.

In the operation 210, the client matches each of data identifiers corresponding to locally stored data respectively with the at least one data identifier interval, and obtains a result of matching.

Particularly the client determines whether the value of any one of the data identifiers corresponding to the locally stored data is more than or equal to the lowest value of data identifier in the at least one data identifier interval, and less than or equal to the highest value of data identifier in the at least one data identifier interval; and if so, then the client determines that the any one of the data identifier lies in the at least one data identifier interval; otherwise, the client determines that the any one of the data identifier does not lie in the at least one data identifier interval.

For example, if the client B obtains two data identifier intervals [1, 6] and [8, 8] from a data download request of the client A, and data identifiers corresponding to locally stored data of the client B are 0 to 9, then the client B can obtain sequentially the data identifiers corresponding to the locally stored data in any order, and determine whether the respective data identifiers lie in the two data identifier intervals, for example, the data identifier 2 is more than or equal to the lowest value of data identifier 1 in the interval [1,6], and less than or equal to the highest value of data identifier 6 in the interval [1, 6], so the data identifier 2 lies in the data identifier interval [1, 6]; the data identifier 8 is more than or equal to the lowest value of data identifier 8 in the interval [8, 8], and less than or equal to the highest value of data identifier 8 in the interval [8, 8], so the data identifier 8 lies in the data identifier interval [8, 8]; and the data identifier 7 is more or than the lowest value of data identifier 1 in the interval [1, 6], and neither less than nor equal to the highest value of data identifier 6 in the interval [1, 6], and the data identifier 7 is neither more than nor equal to the lowest value of data identifier 8 in the interval [8, 8], so the data identifier 7 does not lie in any of the two data identifier intervals [1, 6] and [8, 8]. As a result, the client B reading all the data identifiers corresponding to the locally stored data and making the determination for the respective data identifiers obtains a set of data identifiers lying in the two data identifier intervals as {1, 2, 3, 4, 5, 6, 8}.

In the operation 220, the client, upon determining from the result of matching that there is at least one local data identifier lying in the at least one data identifier interval, sends the stored data corresponding to the at least one data identifier to the other client.

In order to ensure the overall data transmission efficiency and data processing efficiency in the P2P network, preferably if the client determines that there is at least one local data identifier lying in the at least one data identifier interval, then the client further determines whether the number of other clients currently requesting for obtaining the stored data corresponding to the at least one data identifier reaches a preset threshold, and sends the stored data corresponding to the at least one data identifier to the other client upon determining that the number of other clients does not reach the preset threshold.

The client sends an indicator of a wait length of time to the other client, or instructs the other client to reinitiate a data download request to another data source, upon determining that the number of other clients currently requesting for obtaining the stored data corresponding to the at least one data identifier reaches the preset threshold.

For example, if the client provides different other clients with the stored data corresponding to the same data identifier in the same period of time, and the client can serve currently a number 5 of other clients, then 5 is a preset threshold of the client. The client, upon receiving a data download request of another client A, parses the data download request for a set of data identifiers corresponding to data requested by the other client A. The client reads the data identifier sequentially from the set of data identifiers, and determines for each of the read data identifiers whether there is currently another client requesting the client for obtaining data corresponding to the read data identifier, until all the data identifiers in the set of data identifiers are read, where if the client determines that there is another client also requesting for the data corresponding to the data identifier, then the client further determines whether the number of current other clients reaches the preset threshold, and if so, then the client sends an indicator of a wait length of time to the other client A to notify the other client A about a length of time for the other client A to wait for obtaining the request data, or the client sends to the other client A the name or the address of still another client (e.g., the other client B) also possessing the stored data corresponding to the data identifier, so that the other client A reinitiates a data download request to the still other client B; otherwise, the client sends the data corresponding to the data identifier directly to the other client A. If the client determines that there is no other client requesting for the data corresponding to the data identifier, then the client sends the data corresponding to the data identifier directly to the other client A.

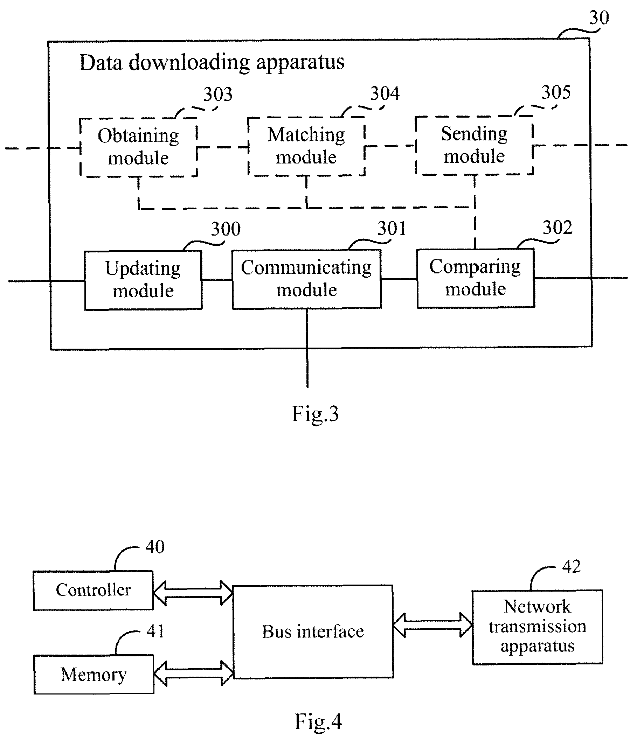

Based upon the embodiments above, referring to Fig.3, an embodiment of the disclosure further provides an apparatus 30 for downloading data particularly including an updating module 300, a communicating module 301, and a comparing module 302, where:

The updating module 300 is configured to update a local download decision recording data identifiers of downloaded data, and data identifiers of data to be downloaded, upon detecting an update to the total number of clients P2P-connected with a local client while the data are being downloaded from a CDN in the P2P mode;

The communicating module 301 is configured to send the local download decision to the other clients P2P-connected with the local client, and to receive download decisions sent by the other clients P2P-connected with the local client; and

The comparing module 302 is configured to compare the local download decision with the received download decisions, and if it is determined from a comparison result that the same data identifier is included in the local download decision and any one of the received download decisions, to determine an adjustment to the local download decision according to a data download state represented by the same data identifier.

Particularly the updating module 300 is configured to be notified by the CDN about the update to the total number of clients P2P-connected with the local client; or to know the update to the total number of clients P2P-connected locally with the client, upon reception of a P2P access notification sent by another client.

Particularly the updating module 300 is configured to be instructed by the CDN to update the local download decision; or to update the local download decision using locally generated random numbers.

Particularly the comparing module 302 is configured, if it is determined from the comparison result that the same data identifier is included in the local download decision and any one of the received download decisions, to compare an initial record time of the same data identifier in the local download decision with an initial record time thereof in the any one of the received download decisions; and if the initial record time of the same data identifier in the local download decision is earlier than the initial record time thereof in the any one of the received download decisions, to determine no adjustment to the local download decision, and to instruct the client sending the any one of the received download decisions to delete the same data identifier, and if the initial record time of the same data identifier in the local download decision is later than the initial record time thereof in the any one of the received download decisions, to delete the same data identifier directly from the local download decision.

On the other hand, the comparing module 302 is configured, if it is determined from the comparison result that the same data identifier is included in the local download decision and any one of the received download decisions, to compare the amount of downloaded data, corresponding to the same data identifier, recorded in the local download decision with the amount of downloaded data, corresponding to the same data identifier, recorded in the any one of the received download decisions; and if the amount of downloaded data, corresponding to the same data identifier, recorded in the local download decision is more than the amount of downloaded data, corresponding to the same data identifier, recorded in the any one of the received download decisions, to determine no adjustment to the local download decision, and to instruct the client sending the any one of the received download decisions to delete the same data identifier; and if the amount of downloaded data, corresponding to the same data identifier, recorded in the local download decision is less than the amount of downloaded data, corresponding to the same data identifier, recorded in the any one of the received download decisions, to delete the same data identifier directly from the local download decision.

Further to the embodiment above, referring to Fig.3, the apparatus further includes an obtaining module 303, a matching module 304, and a sending module 305, where:

The obtaining module 303 is configured to receive a data download request sent by a client, and to obtain at least one data identifier interval from the data download request;

The matching module 304 is configured to match each of data identifiers corresponding to locally stored data respectively with the at least one data identifier interval, and to obtain a result of matching; and

The sending module 305 is configured, if it is determined from the result of matching that there is at least one local data identifier lying in the at least one data identifier interval, to send the stored data corresponding to the at least one data identifier to the client.

Particularly the obtaining module 303 is configured, upon reception of the data download request sent by the client, to obtain all the data identifiers carried in the data download request, from the data download request in a preset order, to determine for each of the obtained data identifiers whether there is another data identifier consecutive in value therewith, and if so, to group the data identifier and the other data identifier into the same data identifier interval; otherwise, to group the data identifier separately into a data identifier interval; or

The obtaining module 303 is configured, upon reception of the data download request sent by the client, to obtain all the data identifiers and associated interval identifiers carried in the data download request, from the data download request, and to group the respective data identifiers into at least one data identifier interval according to the interval identifiers associated with each of the data identifiers; or

The obtaining module 303 is configured, upon reception of the data download request sent by the client, to obtain the at least one data identifier interval directly from a specified field in the data download request.

The matching module 304 is configured to determine whether the value of any one of the data identifiers corresponding to the locally stored data is more than or equal to the lowest value of data identifier in the at least one data identifier interval, and less than or equal to the highest value of data identifier in the at least one data identifier interval; and if so, to determine that the any one of the data identifier lies in the at least one data identifier interval; otherwise, to determine that the any one of the data identifier does not lie in the at least one data identifier interval.

The sending module 305 is configured, if it is determined that there is at least one local data identifier lying in the at least one data identifier interval, to further determine whether the number of other clients currently requesting for obtaining the stored data corresponding to the at least one data identifier reaches a preset threshold, and to send the stored data corresponding to the at least one data identifier to the other client upon determining that the number of other clients does not reach the preset threshold.

Furthermore the sending module 305 is configured to send an indicator of a wait length of time to the client, or to instruct the client to reinitiate a data download request to another data source, if it is determined that the number of other clients currently requesting for obtaining the stored data corresponding to the at least one data identifier reaches the preset threshold.

In summary, in the technical solutions according to the embodiments of the disclosure, if the clients operating in the P2P mode go online or offline, then the local download decisions of the respective clients will be updated in a timely manner by generating the random numbers, and compared and adjusted, thus avoiding the downloaded data from being downloaded repeatedly and saving in effect the network resources.

Furthermore in the technical solutions according to the embodiments of the disclosure, only the data identifier interval can be carried in the data download request sent by the client to thereby save the amount of transmitted data and improve the data transmission efficiency. Moreover in the embodiments of the disclosure, the data identifiers can be matched with the data identifier interval simply by matching once the data identifiers corresponding to the locally stored data with the data identifier interval, to thereby greatly improve the data processing efficiency as compared with the prior art in which each of the received data identifiers is matched with the respective data identifiers of the locally stored data.

Another embodiment of the disclosure provides an electronic device, for example, which can be a smart TV, a personal computer, a smart handset, an iPad, or any other electronic terminals capable of downloading and uploading data.

Referring to Fig.4, the electronic device generally include structurally in hardware a controller 40, a memory 41, and a network transmission apparatus 42, where:

The memory 41 is configured to store a local download decision, and information about opposite electronic devices P2P-connected with the electronic device.

The controller 40 is configured to perform the operations of: updating a local download decision recording data identifiers of downloaded data, and data identifiers of data to be downloaded, upon detecting an update to the total number of opposite electronic devices P2P-connected with the local electronic device while the data are being downloaded from a Content Distribution Network (CDN) in the P2P mode; sending the local download decision to the opposite electronic devices P2P-connected with the local electronic device, and to receive download decisions sent by the opposite electronic devices P2P-connected with the local electronic device, through the network transmission apparatus 42; and comparing the local download decision with the received download decisions, and if it is determined from a comparison result that the same data identifier is included in the local download decision and any one of the received download decisions, then determining an adjustment to the local download decision according to a data download state represented by the same data identifier.

The controller 40 performs the method for downloading data according to the embodiment of the disclosure to update the data download decision and to download the data.

The network transmission apparatus 42 is configured to be instructed by the controller 40 to receive or transmit the data from or to a CDN node or the opposite electronic devices.

Another embodiment of the disclosure provides a system for downloading data including at least two of the electronic devices according to the embodiment above, and a CDN system. The electronic devices are connected with each other over a network, and all of the electronic devices are connected with the CDN system. The electronic devices are configured to update a local download decision recording data identifiers of downloaded data, and data identifiers of data to be downloaded, upon detecting an update to the total number of clients P2P-connected with the local client while the data are being downloaded from a CDN in the P2P mode; to send the local download decision to the other clients P2P-connected with the local client, and to receive download decisions sent by the other clients P2P-connected with the local client; and to compare the local download decision with the received download decisions, and if it is determined from a comparison result that the same data identifier is included in the local download decision and any one of the received download decisions, to determine an adjustment to the local download decision according to a data download state represented by the same data identifier.

Those skilled in the art shall appreciate that the embodiments of the disclosure can be embodied as a method, a system or a computer program product. Therefore the disclosure can be embodied in the form of an all-hardware embodiment, an all-software embodiment or an embodiment of software and hardware in combination. Furthermore the disclosure can be embodied in the form of a computer program product embodied in one or more computer useable storage mediums (including but not limited to a disk memory, a CD-ROM, an optical memory, etc.) in which computer useable program codes are contained.

The disclosure has been described in a flow chart and/or a block diagram of the method, the device (system) and the computer program product according to the embodiments of the disclosure. It shall be appreciated that respective flows and/or blocks in the flow chart and/or the block diagram and combinations of the flows and/or the blocks in the flow chart and/or the block diagram can be embodied in computer program instructions. These computer program instructions can be loaded onto a general-purpose computer, a specific-purpose computer, an embedded processor or a processor of another programmable data processing device to produce a machine so that the instructions executed on the computer or the processor of the other programmable data processing device create means for performing the functions specified in the flow(s) of the flow chart and/or the block(s) of the block diagram.

These computer program instructions can also be stored into a computer readable memory capable of directing the computer or the other programmable data processing device to operate in a specific manner so that the instructions stored in the computer readable memory create an article of manufacture including instruction means which perform the functions specified in the flow(s) of the flow chart and/or the block(s) of the block diagram.

These computer program instructions can also be loaded onto the computer or the other programmable data processing device so that a series of operational steps are performed on the computer or the other programmable data processing device to create a computer implemented process so that the instructions executed on the computer or the other programmable device provide steps for performing the functions specified in the flow(s) of the flow chart and/or the block(s) of the block diagram.

Although the preferred embodiments of the disclosure have been described, those skilled in the art benefiting from the underlying inventive concept can make additional modifications and variations to these embodiments. Therefore the appended claims are intended to be construed as encompassing the preferred embodiments and all the modifications and variations coming into the scope of the disclosure.

Evidently those skilled in the art can make various modifications and variations to the disclosure without departing from the spirit and scope of the disclosure. Thus the disclosure is also intended to encompass these modifications and variations thereto so long as the modifications and variations come into the scope of the claims appended to the disclosure and their equivalents.

## Claims

1. A method for downloading data, the method comprising:
updating, by a client, a local download decision recording data identifiers of downloaded data, and data identifiers of data to be downloaded, upon detecting an update to a total number of clients Peer to Peer connected, P2P-connected, with the local client while data are being downloaded from a Content Distribution Network, CDN, in a P2P mode;
sending, by the client, the local download decision to other clients P2P-connected with the local client, and receiving download decisions sent by the other clients P2P-connected with the local client; and
comparing, by the client, the local download decision with the received download decisions, and if it is determined from a comparison result that a same data identifier is comprised in the local download decision and any one of the received download decisions, then determining an adjustment to the local download decision according to a data download state represented by the same data identifier.

2. The method according to claim 1, wherein detecting, by the client, the update to the total number of clients P2P-connected with the local client comprises:
the client being instructed by the CDN about the update to the total number of clients P2P-connected with the local client; or
knowing, by the client, the update to the total number of clients P2P-connected with the local client, upon reception of a P2P access notification sent by another client.

3. The method according to claim 1, wherein updating, by the client, the local download decision comprises:
updating, by the client, the local download decision according to instruction from the CDN; or
updating, by the client, the local download decision using locally generated random numbers.

4. The method according to claim 1, 2 or 3, wherein if it is determined from the comparison result that the same data identifier is comprised in the local download decision and any one of the received download decisions, then adjusting, by the client, the local download decision according to the data record state represented by the same data identifier comprises:
if it is determined from the comparison result that the same data identifier is comprised in the local download decision and any one of the received download decisions, then comparing, by the client, an initial record time of the same data identifier in the local download decision with an initial record time thereof in the any one of the received download decision; and
if the initial record time of the same data identifier in the local download decision is earlier than the initial record time thereof in the any one of the received download decision, then determining no adjustment to the local download decision, and instructing the client sending the any one of the received download decision to delete the same data identifier, and
if the initial record time of the same data identifier in the local download decision is later than the initial record time thereof in the any one of the received download decision, then deleting the same data identifier directly from the local download decision.

5. The method according to claim 1, 2 or 3, wherein if it is determined from the comparison result that the same data identifier is comprised in the local download decision and any one of the received download decisions, then adjusting, by the client, the local download decision according to the data record state represented by the same data identifier comprises:
if it is determined from the comparison result that the same data identifier is included in the local download decision and any one of the received download decisions, then comparing, by the client, amount of downloaded data, corresponding to the same data identifier, recorded in the local download decision with amount of downloaded data, corresponding to the same data identifier, recorded in the any one of the received download decision; and
if the amount of downloaded data, corresponding to the same data identifier, recorded in the local download decision is more than the amount of downloaded data, corresponding to the same data identifier, recorded in the any one of the received download decision, then determining no adjustment to the local download decision, and instructing the client sending the any one of the received download decision to delete the same data identifier, and
if the amount of downloaded data, corresponding to the same data identifier, recorded in the local download decision is less than the amount of downloaded data, corresponding to the same data identifier, recorded in the any one of the received download decision, then deleting the same data identifier directly from the local download decision.

6. The method according to any one of claims 1 to 5, wherein after the adjustment to the local download decision is determined, the method further comprises:
receiving a data download request sent by other client, and obtaining at least one data identifier interval from the data download request;
matching each of data identifiers corresponding to locally stored data respectively with the at least one data identifier interval, and obtaining a result of matching; and
if it is determined from the result of matching that there is at least one local data identifier lying in the at least one data identifier interval, then sending the stored data corresponding to the at least one data identifier to the other client.

7. The method according to claim 6, wherein receiving the data download request sent by the other client, and obtaining the at least one data identifier interval from the data download request comprises:
upon reception of the data download request sent by the other client, obtaining all data identifiers carried in the data download request, from the data download request in a preset order, determining for each of the obtained data identifiers whether there is another data identifier consecutive in value therewith, and if so, grouping the data identifier and the other data identifier into a same data identifier interval; otherwise, grouping the data identifier separately into a data identifier interval; or
upon reception of the data download request sent by the other client, obtaining all the data identifiers and associated interval identifiers carried in the data download request, from the data download request, and grouping the respective data identifiers into at least one data identifier interval according to the interval identifiers associated with each of the data identifiers; or
upon reception of the data download request sent by the other client, obtaining the at least one data identifier interval directly from a specified field in the data download request.

8. The method according to claim 6, wherein matching each of the data identifiers corresponding to the locally stored data respectively with the at least one data identifier interval, and obtaining the result of matching comprises:
determining whether the value of any one of the data identifiers corresponding to the locally stored data is more than or equal to a lowest value of the data identifier in the at least one data identifier interval, and less than or equal to a highest value of the data identifier in the at least one data identifier interval; and
if so, then determining that the any one of the data identifiers lies in the at least one data identifier interval;
otherwise, determining that the any one of the data identifier does not lie in the at least one data identifier interval.

9. The method according to claim 6, 7 or 8, wherein if it is determined from the result of matching that there is at least one local data identifier lying in the at least one data identifier interval, then sending the stored data corresponding to the at least one data identifier to the other client comprises:
if it is determined that there is at least one local data identifier lying in the at least one data identifier interval, then further determining whether a number of other clients currently requesting for obtaining the stored data corresponding to the at least one data identifier reaches a preset threshold, and sending the stored data corresponding to the at least one data identifier to the other client upon determining that the number of other clients does not reach the preset threshold.

10. The method according to claim 9, further comprising:
sending an indicator of a wait length of time to the other client, or instructing the other client to reinitiate a data download request to another data source, upon determining that the number of other clients currently requesting for obtaining the stored data corresponding to the at least one data identifier reaches the preset threshold.

11. An apparatus for downloading data, the apparatus comprising:
an updating module configured to update a local download decision recording data identifiers of downloaded data, and data identifiers of data to be downloaded, upon detecting an update to the total number of clients Peer to Peer connected, P2P-connected, with a local client while the data are being downloaded from a Content Distribution Network, CDN, in the P2P mode;
a communicating module configured to send the local download decision to other clients P2P-connected with the local client, and to receive download decisions sent by the other clients P2P-connected with the local client; and
a comparing module configured to compare the local download decision with the received download decisions, and if it is determined from a comparison result that a same data identifier is comprised in the local download decision and any one of the received download decisions, to determine an adjustment to the local download decision according to a data download state represented by the same data identifier.

12. The apparatus according to claim 11, wherein the updating module is configured:
to be instructed by the CDN about the update to the total number of clients P2P-connected with the local client; or
to know the update to the total number of clients P2P-connected with the local client, upon reception of a P2P access notification sent by another client.

13. The apparatus according to claim 11, wherein the updating module is configured:
to be instructed by the CDN to update the local download decision; or
to update the local download decision using locally generated random numbers.

14. The apparatus according to claim 11, 12 or 13, wherein the comparing module is configured:
if it is determined from the comparison result that the same data identifier is comprised in the local download decision and any one of the received download decisions, to compare an initial record time of the same data identifier in the local download decision with an initial record time thereof in the any one of the received download decisions; and
if the initial record time of the same data identifier in the local download decision is earlier than the initial record time thereof in the any one of the received download decisions, to determine no adjustment to the local download decision, and to instruct client sending the any one of the received download decisions to delete the same data identifier, and
if the initial record time of the same data identifier in the local download decision is later than the initial record time thereof in the any one of the received download decisions, to delete the same data identifier directly from the local download decision.

15. The apparatus according to claim 11, 12 or 13, wherein the comparing module is configured:
if it is determined from the comparison result that the same data identifier is comprised in the local download decision and any one of the received download decisions, to compare amount of downloaded data, corresponding to the same data identifier, recorded in the local download decision with amount of downloaded data, corresponding to the same data identifier, recorded in the any one of the received download decisions; and
if the amount of downloaded data, corresponding to the same data identifier, recorded in the local download decision is more than the amount of downloaded data, corresponding to the same data identifier, recorded in the any one of the received download decisions, to determine no adjustment to the local download decision, and to instruct client sending the any one of the received download decisions to delete the same data identifier, and
if the amount of downloaded data, corresponding to the same data identifier, recorded in the local download decision is less than the amount of downloaded data, corresponding to the same data identifier, recorded in the any one of the received download decisions, to delete the same data identifier directly from the local download decision.

16. The apparatus according to any one of claims 11 to 15, further comprising:
an obtaining module configured to receive a data download request sent by other client, and to obtain at least one data identifier interval from the data download request, after the adjustment to the local download decision is determined;
a matching module configured to match each of data identifiers corresponding to locally stored data respectively with the at least one data identifier interval, and to obtain a result of matching; and
a sending module configured, if it is determined from the result of matching that there is at least one local data identifier lying in the at least one data identifier interval, to send the stored data corresponding to the at least one data identifier to the other client.

17. The apparatus according to claim 16, wherein the obtaining module is configured:
upon reception of the data download request sent by the other client, to obtain all data identifiers carried in the data download request, from the data download request in a preset order, to determine for each of the obtained data identifiers whether there is another data identifier consecutive in value therewith, and if so, to group the data identifier and the other data identifier into a same data identifier interval; otherwise, to group the data identifier separately into a data identifier interval; or
upon reception of the data download request sent by the other client, to obtain all the data identifiers and associated interval identifiers carried in the data download request, from the data download request, and to group the respective data identifiers into at least one data identifier interval according to the interval identifiers associated with each of the data identifiers; or
upon reception of the data download request sent by the other client, to obtain the at least one data identifier interval directly from a specified field in the data download request.

18. The apparatus according to claim 16, wherein the matching module is configured:
to determine whether the value of any one of the data identifiers corresponding to the locally stored data is more than or equal to a lowest value of data identifier in the at least one data identifier interval, and less than or equal to a highest value of data identifier in the at least one data identifier interval; and
if so, to determine that the any one of the data identifier lies in the at least one data identifier interval;
otherwise, to determine that the any one of the data identifier does not lie in the at least one data identifier interval.

19. The apparatus according to claim 16, 17 or 18, wherein the sending module is configured:
if it is determined that there is at least one data identifier lying in the at least one data identifier interval, to further determine whether a number of other clients currently requesting for obtaining the stored data corresponding to the at least one data identifier reaches a preset threshold, and to send the stored data corresponding to the at least one data identifier to the other client upon determining that the number of other clients does not reach the preset threshold.

20. The apparatus according to claim 19, wherein the sending module is further configured:
to send an indicator of a wait length of time to the other client, or to instruct the other client to reinitiate a data download request to another data source, if it is determined that the number of other clients currently requesting for obtaining the stored data corresponding to the at least one data identifier reaches the preset threshold.

21. An electronic device, comprising a controller, a memory, and a network transmission apparatus, wherein:
the memory is configured to store a local download decision, and information about opposite electronic devices Peer to Peer connected, P2P-connected, with the electronic device;
the controller is configured to perform operations of: updating a local download decision recording data identifiers of downloaded data, and data identifiers of data to be downloaded, upon detecting an update to a total number of opposite electronic devices P2P-connected with the local electronic device while the data are being downloaded from a Content Distribution Network, CDN, in the P2P mode; sending the local download decision to the opposite electronic devices P2P-connected with the local electronic device, and to receive download decisions sent by the opposite electronic devices P2P-connected with the local electronic device, through the network transmission apparatus; and comparing the local download decision with the received download decisions, and if it is determined from a comparison result that a same data identifier is comprised in the local download decision and any one of the received download decisions, then determining an adjustment to the local download decision according to a data download state represented by the same data identifier; and
the network transmission apparatus is configured to be instructed by the controller to receive or transmit the data from or to a CDN node or the opposite electronic devices.

22. A system for downloading data, the system comprising at least two of the electronic devices according to claim 21, which are connected with each other over a network, and a CDN system connected with the electronic devices.
